Europäisches Patentamt

European Patent Office

Office européen des brevets

(11) Veröffentlichungsnummer: **0 262 313 B1**

# (12) EUROPÄISCHE PATENTSCHRIFT

(45) Veröffentlichungstag der Patentschrift: 04.09.91

(51) Int. Cl.⁵: **G05B 19/18**

(21) Anmeldenummer: 87109898.4

(22) Anmeldetag: 09.07.87

(54) **Vorrichtung zur Fehlerkompensation.**

(30) Priorität: 02.10.86 DE 3633573

(43) Veröffentlichungstag der Anmeldung:
06.04.88 Patentblatt 88/14

(45) Bekanntmachung des Hinweises auf die
Patenterteilung:
04.09.91 Patentblatt 91/36

(84) Benannte Vertragsstaaten:
AT CH DE ES FR GB IT LI NL SE

(56) Entgegenhaltungen:
DE-A- 3 320 529
US-A- 3 579 073
US-A- 4 607 435

(73) Patentinhaber: **Dr. Johannes Heidenhain GmbH**
**Dr.-Johannes-Heidenhain-Strasse 5 Postfach 1260**
**W-8225 Traunreut(DE)**

(72) Erfinder: **Miller, Walter, Dr.**
**Adalbert-Stifter-Strasse 19**
**W-8220 Traunstein(DE)**

**Beschreibung**

Die Erfindung bezieht sich auf eine Vorrichtung gemäß dem Oberbegriff des Anspruches 1.

Bei Werkzeugmaschinen neuerer Bauart wird die bestimmungsgemäße Verlagerung in den einzelnen Achsen durch Positionsmeßeinrichtungen (Meßsysteme) erfaßt und mit Hilfe von Positionsanzeigen der Meßwert digital angezeigt. Die von den Positionsmeßeinrichtungen ermittelten Meßwerte können auch NC-Steuerungen zur Weiterverarbeitung zugeführt werden.

Obwohl oftmals die Positionsbestimmung der einzelnen Achsen - beispielsweise bei einer Universal-Werkzeug-Fräsmaschine - aus baulichen Gründen nicht am Ort der betreffenden Achse direkt vorgenommen werden kann, beeinflußt dies die Präzision der Positionsbestimmung nicht, solange sich die Betriebstemperatur nicht ungleichmäßig ändert.

Durch eine hohe Arbeitsdrehzahl der Arbeitsspindel erhöht sich die Betriebstemperatur der Spindellagerung und damit des Vertikal-Fräskopfes in der Nähe der Achse gegenüber dem Spindelschlitten des Fräskopfes. Am Spindelschlitten ist jedoch die Positionsmeßeinrichtung angebracht, mit der die bestimmungsgemäße Verlagerung des Spindelschlittens und damit der Arbeitsspindelachse gemessen wird.

Somit kommt es zu einer temperaturbedingten Verlagerung der Arbeitsspindelachse, die von der Positionsmeßeinrichtung nicht erfaßt wird.

Aus dem Stand der Technik sind verschiedene Vorschläge bekanntgeworden, diese temperaturbedingten Verlagerungen zu kompensieren.

Einer der Lösungsvorschläge, bei denen ein sogenannter Dehnstab zur Wirkung kommt, ist beispielsweise der DE-PS 24 50 322 zu entnehmen. Bei der Verwendung von Dehnstäben, die an der Maßverkörperung der Positionsmeßeinrichtung angreifen, müssen die Ausdehnungskoeffizienten der verschiedenen Materialien und die gegebene Maschinengeometrie berücksichtigt werden. Dehnstab-Kompensationen sind zwar einfach im Aufbau, aber sie reagieren verhältnismäßig träge auf Temperaturänderungen.

Eine andere Lösung ist aus der DE-OS 33 20 529 bekanntgeworden. Dort ist der Maßstab der Positionsmeßeinrichtung verschiebbar am Spindelschlitten gelagert und eine Schubstange aus Material mit kleinem Ausdehnungskoeffizienten bewirkt eine sinngemäße Verschiebung des Maßstabes entsprechend der Temperaturänderung. Diese Lösung hat gegenüber der Dehnstab-Lösung den Vorteil, daß temperaturbedingte Verlagerungen der Arbeitsspindelachse kaum verzögert berücksichtigt werden. Nachteilig ist allerdings, daß für die Verschiebung des Maßstabes sehr genaue Führungen vorgesehen werden müssen.

Der Erfindung liegt die Aufgabe zugrunde, auf einfache Weise die temperaturbedingte Verlagerung eines Maschinenpunktes zu kompensieren und dazu serienmäßige oder zumindest weitgehend serienmäßige Positionsmeßeinrichtungen zu verwenden.

Diese Aufgabe wird durch eine Vorrichtung mit den Merkmalen des Anspruches 1 gelöst

Die besonderen Vorteile der erfindungsgemäßen Kompensation von temperaturbedingten Verlagerungen liegen darin, daß die momentane Verlagerung direkt meßtechnisch erfaßt wird und auf einfachste Weise mit den Positionsmeßwerten verrechnet werden kann. Dabei können beliebige Korrekturfaktoren berücksichtigt werden. Die apparative Ausrüstung kann weitestgehend den serienmäßigen Meßsystemen entsprechen. Besondere Führungselemente sind nicht erforderlich.

Anhand der Zeichnungen soll die Erfindung noch näher erläutert werden.

Es zeigt:

Figur 1    eine    Universal-Werkzeug-Fräsmaschine;

Figur 2    eine schematische Darstellung des Arbeitsspindelkopfes einer Maschine gemäß Figur 1.

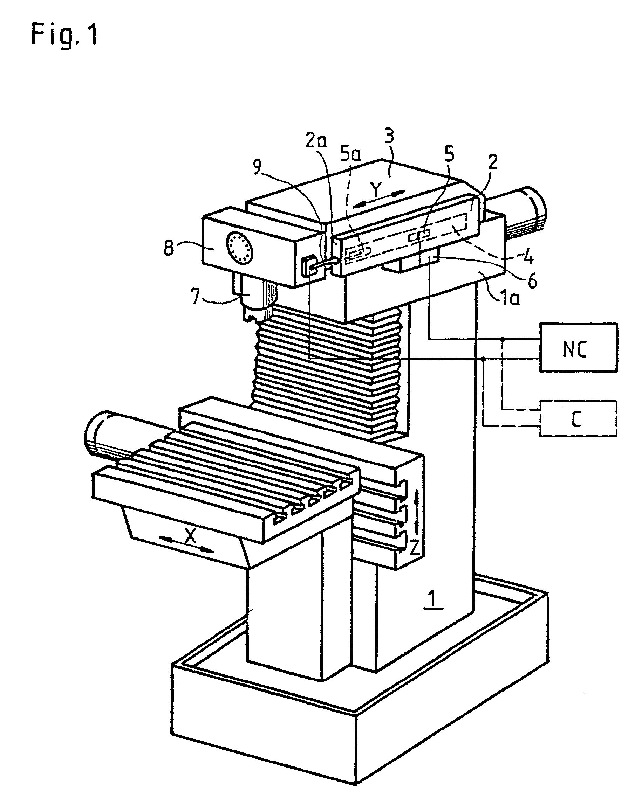

Eine in Figur 1 dargestellte Universal-Werkzeug-Fräsmaschine 1 weist eine numerische Steuerung NC auf, mit der die Fräsmaschine 1 gesteuert wird. Jede der drei Achsen X, Y, Z der Fräsmaschine 1 ist mit einer Positionsmeßeinrichtung versehen, wobei hier nur die Positionsmeßeinrichtung 2 für die Y-Achse dargestellt ist. Die Positionsmeßeinrichtung 2 ist am Spindelschlitten 3 befestigt und trägt eine Maßverkörperung 4. In bekannter Weise wird bei der Verlagerung des Spindelschlittens 3 gegenüber dem Ständer 1a die Maßverkörperung 4 von einer Abtasteinrichtung 5 abgetastet, die mit Hilfe eines Montagefußes 6 fest am Ständer 1a montiert ist. Der Spindelschlitten 3 weist an einer Stirnseite eine Arbeitsspindel 7 auf, die in einem Gehäuse 8 gelagert ist, das mit dem Spindelschlitten 3 verbunden ist.

Bestimmungsgemäße, d.h. über ein NC-Programm oder manuell vorgegebene Verlagerungen der Arbeitsspindel 7 werden durch die Positionsmeßeinrichtung 2 gemessen. Zur Bearbeitung von Werkstücken wird in eine Spannvorrichtung in der Arbeitsspindel 7 ein Werkzeug eingebracht, was hier jedoch nicht gezeigt ist. Durch die verhältnismäßig hohe Drehzahl der Arbeitsspindel 7 bei der Werkstückbearbeitung entsteht in der Lagerung der Arbeitsspindel 7 Wärme, die auch das Gehäuse 8 der Arbeitsspindel 7 erwärmt. Darüber hinaus sind beispielsweise auch die Lagerungen der Getriebewellen Wärmequellen.

Dies führt zur Ausdehnung des Gehäuses 8, bzw. 3 was seinerseits temperaturbedingte Verlagerungen der Arbeitsspindel 7 nach sich zieht. Die Positionsmeßeinrichtung 2, die die Position des Spindelschlittens 3 und damit die Position der Arbeitsspindel 7 messen soll, kann diese temperaturbedingte Verlagerungen nicht erfassen. So entstehen Meßfehler, die darauf beruhen, daß von der Positionsmeßeinrichtung 2 eine Position der Arbeitsspindel 7 registriert wird, die aber nicht der tatsächlichen Position der Arbeitsspindel 7 entspricht.

Bei der Erfindung ist in der Positionsmeßeinrichtung 2 an der Stirnseite 2a, die der Arbeitsspindel 7 zugewandt ist eine zusätzliche Abtasteinrichtung 5a vorgesehen. Die zusätzliche Abtasteinrichtung 5a ist im Gegensatz zur normalen Abtasteinrichtung 5 nicht am Ständer 1a der Fräsmaschine 1 angebracht, sondern mit dem Gehäuse 8 in der Ebene der Arbeitsspindelachse 7a verbunden. Die Verbindung der Abtasteinrichtung 5a mit dem Gehäuse 8 erfolgt über eine Schubstange 9 aus Material mit hinreichend geringem Ausdehnungskoeffizienten.

Bei temperaturbedingten Verlagerungen der Arbeitsspindelachse 7a wird die Abtasteinrichtung 5a entlang der Maßverkörperung 4 um einen Betrag verschoben, der der Verlagerung entspricht. Die Abtasteinrichtung 5a tastet dabei die Maßverkörperung 4 in gleicher Weise ab, wie die normale Abtasteinrichtung 5. Unmittelbar mit der temperaturbedingten Verlagerung der Arbeitsspindel 7 wird diese also nach Richtung und Betrag ermittelt. Der Meßwert für die Verlagerung wird einer Auswerteinrichtung C, NC zugeführt und dort mit dem bestimmungsgemäßen Positionsmeßwert verrechnet. Dazu sind sowohl die normale als auch die zusätzliche Abtasteinrichtung 5 bzw. 5a an eine numerische Steuerung NC oder an einen elektronischen Zähler C angeschlossen.

Mittels der Auswerteeinrichtung C, NC kann demgemäß die temperaturbedingte Verlagerung der Arbeitsspindelachse 7a kompensiert werden, wobei ohne weiteres noch zusätzlich Korrekturfaktoren beliebiger Art berücksichtigt werden können.

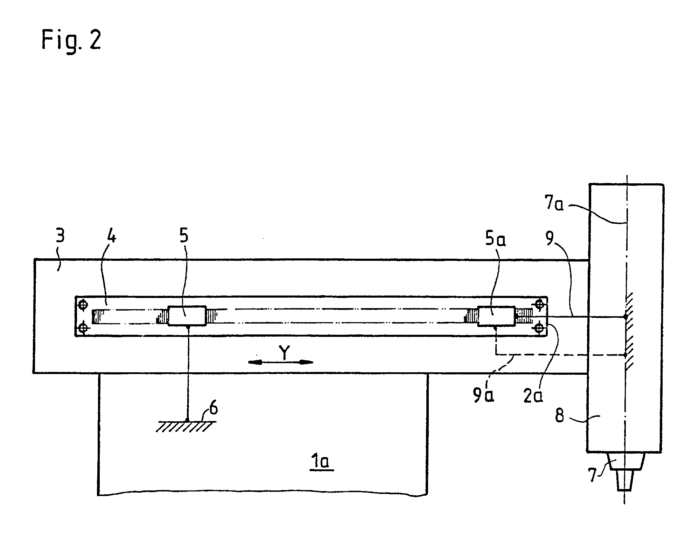

Der apparative Aufwand für eine derartige Kompensation ist sehr gering, da moderne Auswerteeinrichtungen bereits über Mikroprozessoren verfügen und die Verrechnung der entsprechenden Meßwerte unproblematisch ist. Eine zusätzliche Abtasteinrichtung 5a kann weitestgehend identisch sein mit der normalen Abtasteinrichtung 5 und wird in der Positionsmeßeinrichtung 2 genauso geführt wie diese. Die mechanische Ankopplung mit Hilfe der Schubstange 9 kann durch eine stirnseitige Verbindung von Abtasteinrichtung 5a mit einem Fixpunkt am Gehäuse 8 erfolgen, der in der gleichen Ebene liegt, wie die Arbeitsspindelachse 7a. Bei dieser in Figur 2 mit durchgehender Linie gezeigten Ankopplung der Abtasteinrichtung 5a treten keine Kippfehler auf, da die Schubstange 9 entsprechend dem Abbeschen Komparatorprinzip in der direkten Verlängerung der Meßteilung der Maßverkörperung 4 liegt.

Sollen jedoch die Abtasteinrichtungen 5 und 5a völlig identisch sein, so ist auch eine Ankopplung mittels Schubstange 9a möglich, die in Figur 2 mit unterbrochener Linie gezeichnet ist. Da hier die besagten Kippfehler auftreten können, wird ein entsprechender Korrekturwert bei der Kompensation berücksichtigt.

## Patentansprüche

1. Vorrichtung zur Kompensation von temperaturbedingten Verlagerungen eines Maschinenpunktes, insbesondere der temperaturbedingten Verlagerung einer Arbeitsspindelachse gegenüber einem Maschinen-Referenzpunkt, wobei die Meßwerte zur bestimmungsgemäßen Positionierung der Arbeitsspindelachse mittels einer Positionsmeßeinrichtung ermittelt werden, die mindestens eine Abtasteinrichtung zur Abtastung einer Maßverkörperung aufweist, dadurch gekennzeichnet, daß die temperaturbedingte Verlagerung von einer zusätzlichen mit der Abtasteinrichtung (5) gleichartigen Abtasteinrichtung (5a) nach Richtung und Betrag direkt an der Maßverkörperung (4) der Positionsmeßeinrichtung (2) ermittelt und mit den Meßwerten zur bestimmungsgemäßen Positionierung der Arbeitsspindel (7) verrechnet wird, wobei die zusätzliche Abtasteinrichtung (5a) an der der Arbeitsspindelachse (7a) zugewandten Seite (2a) der Positionsmeßeinrichtung (2) angeordnet und mit dem Gehäuse (8) der Arbeitsspindel (7) über eine Schubstange (9) aus Material mit hinreichend kleinem Ausdehnungskoeffizienten verbunden ist und wobei die Abtasteinrichtungen (5, 5a) an eine Auswerteeinrichtung (C; NC) angeschlossen sind.

2. Vorrichtung nach Anspruch 1, dadurch gekennzeichnet, daß die Auswerteeinrichtung ein elektronischer Zähler (C) ist.

3. Vorrichtung nach Anspruch 1, dadurch gekennzeichnet, daß die Auswerteeinrichtung eine NC-Steuerung (NC) ist.

## Claims

1. Apparatus for error compensation of temperature-dependent displacements of a machine point, especially the temperature-dependent displacement of a machining spindle axis relative to a machine reference point, wherein the measured values for the intended positioning of the machining spindle axis are determined by means of a position measuring device, which has at least one sensing device for sensing a scale unit, characterized in that the temperature-dependent displacement of an additional sensing device (5a) of the same form as the sensing device (5) is determined in direction and amount directly from the scale unit (4) of the position measuring device (2) and is set off against the measured values for the intended positioning of the machining spindle (7), wherein the additional sensing device (5a) is arranged at the end (2a) of the position measuring device (2) facing the machining spindle axis (7a) and is connected to the housing (8) of the machining spindle (7) through a connecting rod (9) of material with sufficiently small coefficient of expansion and wherein the sensing devices (5, 5a) are connected to an evaluating device (C; NC).

2. Device according to claim 1, characterized in that the evaluating device is an electronic counter (C).

3. Device according to claim 1, characterized in that the evaluating device is a numerical control (NC).

**Revendications**

1. Dispositif pour compenser des déplacements d'un point d'une machine dus à la température, notamment le déplacement dû à la température d'un axe de broche de machine par rapport à un point de référence de la machine, les valeurs de mesure pour le positionnement déterminé de l'axe de la broche de travail étant déterminées au moyen d'un dispositif de mesure de position qui présente au moins un dispositif de lecture pour lire une règle de mesure, caractérisé par le fait que le déplacement dû à la température est déterminé, quant à sa valeur et à son sens, directement à l'aide de la règle de mesure (4) du dispositif de lecture supplémentaire (5a) du même type que le dispositif de lecture (5), et est combiné par calcul avec les valeurs de mesure pour le positionnement déterminé de la broche de travail (7), le dispositif de lecture supplémentaire (5a) étant agencé sur le côté (2a) du dispositif de mesure de position (2) tourné vers l'axe (7a) de la broche de travail et étant lié au carter (8) de la broche de travail (7) par l'intermédiaire d'une tige de transmission (9) en une matière ayant un coefficient de dilatation suffisamment petit, et les dispositifs de lecture (5, 5a) étant raccordés à un dispositif d'interprétation-évaluation (C, NC).

2. Dispositif selon revendication 1, caractérisé par le fait que le dispositif d'interprétation-évaluation est un compteur électronique (C).

3. Dispositif selon revendication 1, caractérisé par le fait que le dispositif d'interprétation-évaluation est une commande numérique (NC).

EP 0 262 313 B1

# Fig.1

Fig. 2